# EUROPÄISCHE PATENTSCHRIFT

(11) **EP 0 629 433 B1**
(45) Veröffentlichungstag und Bekanntmachung des Hinweises auf die Patenterteilung: **30.10.1996**
(21) Anmeldenummer: 94108617.5
(22) Anmeldetag: 06.06.1994
(51) Int. Cl.: B01D 61/14, B05B 15/12, C02F 1/44, B01D 61/02

(54) **Verfahren zur Aufkonzentration von Lack-Overspray**
Method for concentration of paint overspray
Procédé de concentration de l'excédent d'une peinture pulvérisée

(30) Priorität: 17.06.1993 DE 4319994
(43) Veröffentlichungstag der Anmeldung: 21.12.1994
(73) Patentinhaber: BAYER AG, 51368 Leverkusen (DE)
(72) Erfinder: Nickel, Andreas, D-58300 Wetter (DE); Hovestadt, Wieland, Dr., D-47802 Krefeld (DE); Sickert, Armin, D-47800 Krefeld (DE); Brück, Jochen, Dr., D-51061 Köln (DE)

(56) Entgegenhaltungen:
- EP-A- 0 536 648
- WO-A-91/09666
- WO-A-92/15633
- DE-A- 2 945 523
- FR-A- 2 072 951
- JOURNAL FÜR OBERFLÄCHENTECHNIK, Bd.32, Nr.10, Oktober 1992 Seiten 32 - 38 H. SUTTER 'Wasserlackrecycling bei der Sprizlackierung'
- MULDER 'BASIC PRINCIPLES OF MEMBRANE TECHNOLOGY' 1990 , KLUWER , DORDRECHT, NL * Seite 209, Absatz 2 * * Seite 212, letzter Absatz *

## Beschreibung

Die Erfindung betrifft ein Verfahren zur Aufkonzentration des in Spritzkabinen mit Naßabscheidung anfallenden Oversprays von einkomponentigen Wasserlacken durch Nanofiltration, sowie die Verwendung des hierbei anfallenden Permeats als Kabinenwasser und des dabei anfallenden Retentats als Lack oder als Bestandteil eines neuen Lackansatzes.

Der Begriff "Overspray" soll hierbei diejenigen Lackbestandteile umfassen, die beim Verspritzen des Lacks nicht auf das zu beschichtende Substrat treffen und damit ohne besondere Vorkehrungen verloren sind.

Augrund der immer größer werdenden Umweltproblematik sind in jüngerer Zeit verschiedenste Verfahren entwicket worden, um die Sondermüllmenge, die durch Lackoverspray entsteht, zu reduzieren. Üblicherweise wird der durch das Wasser der Spritzkabine verdünnte Overspray in Sammelbecken koaguliert und entsorgt. Das Konzept einiger neuer Verfahren für wasserverdünnbare Lacke beruht darauf, auf eine Koagulation zu verzichten und den Overspray stattdessen schonend aufzukonzentrieren und als Lack wiederzuverwerten.

Die DE-OS 23 53 469 beschreibt die Aufkonzentration des Oversprays durch eine Ultrafiltration. Der verdünnte Overspray strömt an einer semipermeablen Membran vorbei, wobei die niedermolekularen Stoffe, insbesondere Wasser aber auch niedermolekulare Bindemittelbestandteile und Hilfsmittel, die Membran als sogenanntes Permeat durchdringen, während die Hauptbestandteile des Lacks von der Membran zurückgehalten und als sogenanntes Retentat weitergeleitet werden.

In der DE-OS 34 28 300 wird dargestellt, daß als Wasser der Spritzkabine ausschließlich entsalztes Wasser verwendet werden sollte, um ein Koagulieren des Oversprays zu vermeiden. In dem durch die DE-OS 29 45 523 beschriebenen Verfahren wird das gleiche Ziel durch Zusatz von Emulgatoren erreicht.

Aus der EP-A-0 141 171 ist bekannt, daß es möglich ist, die Ultrafiltration kontinuierlich zu betreiben. Von dem in der Spritzkabine im Kreislauf geführten Gemisch aus Kabinenwasser und Overspray wird kontinuierlich eine Teilmenge abgetrennt und ultrafiltriert. Das Permeat wird dem Kabinenwasser wieder zugeführt. Die physikalischen und chemischen Eigenschaften des als Rohlack bezeichneten Retentats werden geprüft. Nach z.B. Verdünnen bzw. Konzentrieren kann der aufkonzentrierte Overspray wiederverwertet werden.

Die WO 91/09666 beschreibt die Wiederaufarbeitung von hitzehärtbaren, wäßrigen Alkyd- oder Acrylharzen durch Ultrafiltration, wobei ein aliphatisches Amin zur Verhinderung der Koaleszenz der Lacke und ein Glykolderivat zur Einstellung des Durchsatzes bei der Ultrafiltration zugesetzt wird.

Die EP-A-0 508 107 überträgt das Verfahren auf wäßrige, lufttrocknende Lacke, wobei zur Verzögerung der Trocknung Oxime zugegeben werden.

Die DE-OS 41 38 088 weitet das Verfahren auch auf Zweikomponentenlacke aus. Als Polymerisationsverzögerer sollen Glykole, Ketone oder Phosphorsäureester eingesetzt werden.

Aus der neueren Literatur (z.B. JOT 10 (1992) 32 bis 38, JOT 3 (1992) 28 bis 33) ist bekannt, daß sehr viele Lacksysteme der Ultrafiltrationstechnik nicht zugänglich sind. Gründe hierfür können z.B. eine hohe Neigung zur Schaumbildung durch niedermolekulare Emulgatoren, eine mangelnde Scherstabilität der Bindemittel oder auch niedermolekulare Bindemittelbestandteile sein, die in das Permeat gelangen und sich dort anreichern. Diese verlorengegangenen Bestandteile können für die Lackqualität des Recyclats von entscheidender Bedeutung sein, so daß eine Wiederverwertung nicht möglich ist.

Die EP-A-0 536 648 beschreibt ein Verfahren zur Rückgewinnung des Oversprays von wäßrigen Überzugsmitteln, wobei ein Teil der Overspray enthaltenden Auswaschflüssigkeit einem Ultrafiltrationskreislauf zugeführt wird und wobei im Ultrafiltrationskreislauf Permeat entzogen wird. Dem wäßrigen Permeat können durch Umkehrosmose niedermolekulare Bestandteile entzogen werden. Diese können in den Ultrafiltrationskreislauf zurückgeführt werden.

Aufgabe der Erfindung war es daher, ein Verfahren zu entwickeln, welches die Wiederverwertung auch von solchen Lacksystemen ermöglicht, die der Ultrafiltrationstechnik aus den oben beschriebenen Gründen nicht zugänglich sind.

Überraschenderweise wurde nun gefunden, daß diese Aufgabe durch ein Verfahren, welches auf der Nanofiltrationstechnik beruht, gelöst werden kann.

Die Nanofiltration ist ebenfalls ein Druckpermeationsverfahren und in ihrem Trennverhalten zwischen der Ultrafiltration und der Umkehrosmose einzuordnen (siehe z.B. R. Rautenbach, G. Schneider, Abschlußbericht zum DFG-Forschungsvorhaben "Nanofiltration", RWTH Aachen (1993)). Bei der Ultrafiltration wird bei Drücken zwischen 2 bis maximal 10 bar und Membrantrenngrenzen von 1.000 bis 100.000 g/Mol gearbeitet. Wegen der vergleichsweise geringen Membrantrenngrenze von 200 bis 2.000 g/Mol werden bei der Nanofiltration zur Erzielung ähnlicher Durchflußraten dagegen höhere Drücke von bis zu 40 bar benötigt.

Gegenstand der Erfindung ist ein Verfahren zur Aufkonzentration des in Spritzkabinen mit Naßabscheidung anfallenden Oversprays von einkomponentigen Wasserlacken, dadurch gekennzeichnet, daß die Aufkonzentration des durch das Wasser der Spritzkbine verdünnten Oversprays durch eine Nanofiltration mit Membranen einr Ausschlußgrenze von 200 bis 2.000 g/Mol bei Drücken von 12 bis 40 bar erfolgt.

Als Lacke kommen alle wasserverdünnbaren, einkomponentigen Systeme wie physikalisch-trocknende-, oxidativ-trocknende-, UV-härtende- oder Einbrennsysteme, in Frage. Beispielhaft genannt seien 1-Komponenten-Polyurethan- oder Polyacrylatdispersionen, fettsäuremodifizierte Polyurethan- oder Polyacrylatdispersionen, Lacke auf Polybutadienbasis, ungesättigte Polyester oder Polyacrylate oder hydroxyfunktionelle Polyester, Polyacrylate oder Polyurethane in Kombination mit Aminovernetzerharzen oder blockierten Polyisocyanaten.

Der Festkörpergehalt dieser Lacke liegt im allgemeinen bei mindestens 20, vorzugsweise 30 bis 70 Gew.-%, während der Festkörpergehalt des mit dem Wasser der Spritzkabine verdünnten Oversprays im allgemeinen bei 0,5 bis 20, vorzugsweise 1,0 bis 10 Gew.-% liegt. Unter "Aufkonzentration" im Sinne des erfindungsgemäßen Verfahrens ist demzufolge vor allem die Gewinnung eines wäßrigen Systems aus dem Overspray/Kabinenwasser-Gemisch zu verstehen, dessen Festkörpergehalt ebenfalls bei mindestens 20, vorzugsweise bei 30 bis 70 Gew.-% liegt.

Das erfindungsgemäße Verfahren ist für alle wäßrigen Einkomponentenlacke geeignet, die bislang durch Ultrafiltration aufgearbeitet wurden. Vorzugsweise wird das erfindungsgemäße Verfahren jedoch bei solchen Lacken angewendet, bei denen die Aufarbeitung durch Ultrafiltration nicht möglich ist, da lackwesentliche Bestandteile verlorengehen.

Gegebenenfalls dem Originallack zugesetzte Pigmente oder Füllstoffe verbleiben wegen ihrer Größe im Retentat. Lackhilfsmittel wie Verlaufsmittel, Glanzverbesserer, Antiabsetzmittel, Verdicker, Thixotropiemittel, Antioxidantien, Hitzestabilisatoren usw. sollten möglichst ebenfalls so ausgewählt werden, daß sie nicht durch die Membran in das Permeat gelangen können.

Spritzkabinen mit Naßabscheidung sind an sich bekannt. Das Wasser der Spritzkabine dient dazu, den Overspray aus der Abluft auszuwaschen. Der Overspray reichert sich während des Betriebes im Kabinenwasser an. Das erfindungsgemäße Verfahren zur Aufkonzentration des Overspray/Kabinenwasser-Gemischs mit dem obengenannten Festkörpergehalt kann diskontinuierlich oder kontinuierlich erfolgen.

Beim diskontinuierlichen Verfahren wird das Overspray/Kabinenwasser-Gemisch in einen Zwischenspeicher gepumpt. Von dort erfolgt die Auftrennung in Retentat und Permeat unter Druck mittels einer Pumpe durch eine Nanofiltrationseinheit. Das sich aufkonzentrierende Retentat wird vorzugsweise so lange im Kreis gepumpt, bis sein Festkörpergehalt innerhalb der obengenannten Bereiche liegt, d.h. dein des Originallacks entspricht, was durch fortlaufende Bestimmung der Viskosität des Retentats verfolgt werden kann, so daß das Retentat, d.h. der wiedergewonnene Lack, vorzugsweise ohne weitere Modifizierung, wieder eingesetzt werden kann. Das Permeat kann erneut als Spritzkabinenwasser wiederverwendet werden.

Beim kontinuierlichen Verfahren wird der Spritzkabine laufend ein Teil des Overspray/Kabinenwasser-Gemisches entzogen und durch Nanofiltration aufkonzentriert. Das Permeat wird kontinuierlich rückgeführt. Eventuell durch Verdunsten entstehende Wasserverluste werden durch Frischwasser ausgeglichen. Der Festkörpergehalt des Overspray/Kabinenwasser-Gemisches in der Spritzkabine kann so bei 0,5 bis 20 Gew.-%, vorzugsweise 1,0 bis 10 Gew.-% konstant gehalten werden.

Als Kabinenwasser wird vorzugsweise entsalztes Wasser verwendet, um eine Koagulation des Oversprays zu verhindern. Ebenfalls empfehlenswert ist die Mitverwendung einer bioziden Komponente, um einen bakteriellen Befall des Kabinenwassers auszuschließen.

Für die beim erfindungsgemäßen Verfahren zum Einsatz gelangende Nanofiltrationseinheit sind alle marktüblichen Membranmodule geeignet, wie Kissen-, Platten-, Spiralwickel-, Rohr-, Kapillar- oder Hohlfasermodule. Die Membranen können aus Polysulfon, Polyacrylnitril, Polyethylen, Teflon, porösem Kohlenstoff, Keramik, Celluloseacetat, Polyharnstoff, aromatischen oder aliphatischen Polyamiden, sulfonierten Polyarylethern, Polyfuran, Polybenzimidazol, verschiedenen Fluor-polymeren, Polyetheraromaten wie Polyimid oder Polyimidazopyrro-lidon oder ähnlichen Materialien hergestellt sein. Bevorzugt werden Platten- oder Rohrmodule aus Polysulfon oder Polyacrylnitril verwandt.

Die wichtigste Kenngröße der Membranen ist ihre Ausschlußgrenze, auch "Membrantrenngrenze" genannt. Sie beschreibt das Molekulargewicht, ab dem gelöste Moleküle, bedingt durch die Porengröße der Membran, zurückgehalten werden. Beim erfindungsgemäßen Verfahren werden Membranen eingesetzt, die eine Ausschlußgrenze von 200 bis 2.000 g/Mol, bevorzugt 200 bis 1.000 g/Mol, besonders bevorzugt 500 bis 1.000 g/Mol besitzen.

Als Pumpen können solche beliebiger Bauweise eingesetzt werden, vorausgesetzt die für das erfindungsgemäße Verfahren erforderliche transmembrane Druckdifferenz von 12 bis 40 bar, vorzugsweise 15 bis 30 bar wird erreicht. Bevorzugt sollten jedoch solche Pumpen eingesetzt werden, wie z.B. Membrankolbenpumpen, bei denen die Scherbelastung des Materials möglichst gering ist.

Der Permeatfluß, also die Geschwindigkeit der Aufkonzentration, kann durch die transmembrane Druckdifferenz beeinflußt werden. Höhere Druckdifferenzen bewirken in der Regel einen höheren Permeatfluß. Durch einen höheren Permeatfluß kann sich jedoch in besonderen Fällen die Selektivität der Aufkonzentration verschlechtern. Bei der Durchführung des erfindungsgemäßen Verfahrens wird vorzugsweise bei Permeatflüssen von 5 bis 200, insbesondere von 10 bis 100 l/m²/h gearbeitet. Durch die während der Aufkonzentration höher werdende Viskosität sinkt der Permeatfluß bei gleicher Druckdifferenz mit der Zeit. Gemäß einer besonderen Ausführungsform des erfindungsgemäßen Verfahrens wird daher der Permeatfluß durch eine Erhöhung der Druckdifferenz während der Aufkonzentration konstant gehalten. Gemäß einer besonderen Arbeitsweise kann zudem durch Zusatz von geeigneten Hilfsmitteln zum Kabinenwasser der Permeatfluß erhöht werden. Derartige Hilfsmittel sind z.B. wasserlösliche, ein- oder zweiwertige, gegebenenfalls Etherbrücken aufweisende Alkohole mit einem unter 200 liegenden Molekulargewicht, die, falls überhaupt, in Mengen von bis zu 20, vorzugsweise bis zu 10 Gew.-%, bezogen auf das Gewicht des Kabinenwassers, eingesetzt werden. Konkrete Beispiele sind 2-(n-Butoxy)-ethanol (Butylgykol), 2-[2-(n-Butoxy)-ethoxy]-ethanol(Butyldiglykol) oder Propylenglykol.

Die Stabilität vieler wasserverdünnbarer Lacke ist stark vom pH-Wert abhängig. Bei zu starken Schwankungen neigen sie zur Koagulation. Viele dieser Lacke sind mit Aminen neutralisiert. Diese Amine sind in der Regel so niedermolekular, daß sie die Membran passieren können, so daß der pH-Wert während der Aufkonzentration sinkt. In einer bevorzugten Ausführungsform des erfindungsgemäßen Verfahrens wird der pH-Wert daher während der Aufkonzentration laufend kontrolliert und falls erforderlich durch Zudosieren von Amin auf dem pH-Wert des Originallackes gehalten.

Die Aufkonzentration erfolgt in der Regel bei Raumtemperatur. Da durch Reibung während des Prozesses Wärme entsteht, kann es erforderlich sein, das Overspray/Kabinenwassergemisch zu kühlen.

Die Aufkonzentration des Overspray/Kabinenwassergemisches erfolgt, wie bereits oben ausgeführt, in der Regel bis zum Festgehalt bzw. bis zur Spritzviskosität des Originallackes. In vielen Fällen ist es möglich, das so erhaltene Lackmaterial ohne weitere Modifizierung wieder einzusetzen. Um Qualitätsschwankungen zu vermeiden, ist es aber auch möglich, vor der Wiederverwendung Frischlack mit dem Konzentrat, entsprechend der Menge, in der es durch Overspray anfällt, abzumischen. In einem solchen Fall würde das Retentat als Bestandteil eines neuen Lackansatzes verwendet.

In einigen Fällen können geringe Mengen lackwesentlicher Bestandteile durch die Membran nicht zurückgehalten werden. Dieses können z.B. die obengenannten Lackhilfsmittel aber auch Anteile des Vernetzerharzes, wie z.B. Aminovernetzerharze sein. Um die Originallackqualität wieder zu erreichen, können diese Anteile entsprechend der verlorengegangenen Menge, dem Konzentrat wieder zugesetzt werden.

Die folgenden Beispiele sollen die Erfindung näher erläutern, ohne sie jedoch einzuschränken. Ein Vergleich des erfindungsgemäßen Beispiels mit dem nicht erfindungsgemäßen Beispiel belegt die Voteile des neuen Verfahrens. Alle Angaben in "Teilen" oder "%" beziehen sich auf das Gewicht.

### Beispiel 1

In einer Spritzkabine mit Naßauswaschung wurden 20 kg des folgenden Lacks mit einem Oversprayanteil von 50 % verspritzt:
- 49,5 %: Polyester-Polyurethan-Dispersion (42 %ig in Wasser/N-Methylpyrrolidon 52,3 : 4,6, neutralisiert mit 1,1 % Dimethylethanolamin, mittleres Molekulargewicht Mw = 11.000, Uneinheitlichkeit U = 3,0)
- 29,7 %: Weißpigment (®Bayertitan R-KB-4, Bayer AG)
- 9,9 %: Aminovernetzerharz (®Luwipal LR 8839, BASF AG, 90 % in Isobutanol)
- 8,5 %: Wasser
- 1,2 %: Dimethylethanolamin
- 1,0 %: Verlaufsverbesserer (®Tegopren 100, Tego Chemie Service GmbH, 10 % in Wasser)
- 0,2 %: Netzmittel (®Fluorad FC 129,3 M)

Der Lack wird mit Wasser auf eine Spritzviskosität von 35 s (DIN-4-Becher/23°C) verdünnt. Der Festgehalt liegt bei 59 %, der pH-Wert bei 8,8.

Als Kabinenwasser wird entsalztes Wasser verwandt. Zu 50 Teilen Kabinenwasser wird 1 Teil Butylglykol gegeben.

Nach Beendigung des Spritzvorgangs wird das Overspray/Kabinenwasser-Gemisch in einen Zwischenspeicher gepumpt. Der Festgehalt beträgt 2,5 %.

Zur Aufkonzentration durch Nanofiltration wird ein Modul mit einer Membranfläche von 1 m² verwandt. Die Membran besteht aus Polysulfon mit einer Ausschlußgrenze von 800 g/Mol.

Bei einem Druck von 20 bar beträgt der Permeatfluß zu Beginn 40 l/m²/h. Der pH-Wert wird durch Zugabe von Dimethylethanolamin auf einen konstanten Wert von 8,8 gehalten. Nach 9 h ist der Originalfestkörpergehalt von 59 % wieder erreicht. Zu diesem Zeitpunkt beträgt der Permeatfluß noch 18 l/m²/h.

30 % des eingesetzten Aminoharzes sind durch die Membran in das Permeat gelangt. Wird die entsprechende Menge wieder zugesetzt, so ist das Retentat in allen wesentlichen lacktechnischen Eigenschaften wie Härte, Trocknungsgeschwindigkeit, Glanz, Schwitzwasserbeständigkeit oder Lösemittelbeständigkeit mit dem Originallack identisch, so daß es als Lack für den gleichen Anwendungszweck wieder eingesetzt werden kann.

Das Permeat wird beim nächsten Spritzvorgang als Kabinenwasser wiederverwendet.

### Beispiel 2 (nicht erfindungsgemäß)

Wie in Beispiel 1, werden 20 kg des gleichen Lacks unter gleichen Bedingungen verspritzt.

Die Aufkonzentration erfolgt diesmal durch eine Ultrafiltration mit einem Modul einer Membranfläche von 1 m². Die Membran besteht aus Polysulfon mit einer Ausschlußgrenze von 5000 g/Mol.

Bei einem Druck von 8 bar beträgt der Permeatfluß zu Beginn 13 l/m²/h. Wie in Beisiel 1, wird der pH-Wert durch Zugabe von Dimethylethanolamin auf einem konstanten Wert von 8,8 gehalten. Nach 30 Stunden beträgt der Permeatfluß nur noch 0,6 l/m²/h, so daß die Aufkonzentration bei einem erreichten Festkörpergehalt von nur 48 % abgebrochen werden muß.

40 % des eingesetzten Aminoharzes sind durch die Membran gelangt. Auch nach Zugabe dieser verlorengegangenen Menge zum Retentat lassen sich weder der Glanz noch die Lösemittelbeständigkeit oder die Härte des Originallacks wieder erreichen. Eine Verwendung des Retentats für den gleichen Anwendungszweck ist nicht möglich.

## Patentansprüche

1. Verfahren zur Aufkonzentration des in Spritzkabinen mit Naßauswaschung anfallenden Oversprays von einkomponentigen Wasserlacken, dadurch gekennzeichnet, daß die Aufkonzentration des durch das Wasser der Spritzkabine verdünnten Oversprays durch eine Nanofiltration mit Membranen einer Ausschlußgrenze von 200 bis 2000 g/Mol bei Drücken von 12 bis 40 bar erfolgt.

2. Verfahren nach Anspruch 1, dadurch gekennzeichnet, daß die Aufkonzentration des durch das Wasser der Spritzkabine verdünnten Oversprays durch eine Nanofiltration mit Membranen einer Ausschlußgrenze von 200 bis 1000 g/Mol bei Drücken von 15 bis 30 bar erfolgt.

3. Verfahren nach Anspruch 1 und 2, dadurch gekennzeichnet, daß als Kabinenwasser entsalztes Wasser verwendet wird.

4. Verfahren nach Anspruch 1 bis 3, dadurch gekennzeichnet, daß dem Kabinenwasser zur Verbesserung des Permeatflusses einem Glykolderivat wasserlösliche ein- oder zweiwertige, gegebenenfalls Etherbrücken aufweisende Alkohole in einer Menge von bis zu 20 Gew.-%, bezogen auf das Gewicht des Wassers, zugegeben werden.

5. Verfahren nach Anspruch 1 bis 4, dadurch gekennzeichnet, daß der pH-Wert während der Nanofiltration laufend kontrolliert und ein Absinken des pH-Wertes durch die Zugabe von Aminen ausgeglichen wird.

6. Verwendung des beim Verfahren gemäß Anspruch 1 bis 5 anfallenden Permeats als Kabinenwasser.

7. Verwendung des beim Verfahren gemäß Anspruch 1 bis 5 anfallenden Retentats als Lack oder als Bestandteil eines neuen Lackansatzes.

## Claims

1. A process for the concentration of the overspray of one-component water-based coatings arising in spray booths with wet scrubbing, characterized in that the overspray diluted by the water of the spray booth is concentrated by a nanofiltration using membranes having a cut-off of 200 to 2000 g/mol at pressures of 12 to 40 bar.

2. A process according to claim 1, characterized in that the overspray diluted by the water of the spray booth is concentrated by a nanofiltration using membranes having a cut-off of 200 to 1000 g/mol at pressures of 15 to 30 bar.

3. A process according to claim 1 and 2, characterized in that deionized water is used as booth water.

4. A process according to claims 1 to 3, characterized in that to improve the permeate flow water-soluble, mono- or dihydric alcohols, optionally having ether bridges, are added to the booth water to a glycol derivative in an amount of up to 20 wt.% relative to the weight of the water.

5. A process according to claims 1 to 4, characterized in that the pH value is continuously monitored during the nanofiltration and a fall in the pH value is compensated for by the addition of amines.

6. The use as booth water of the permeate arising during the process according to claims 1 to 5.

7. The use as coating or as constituent of a new batch of coating of the retentate arising during the process according to claims 1 to 5.

## Revendications

1. Procédé pour reconcentrer les pertes de pulvérisation de peintures aqueuses à un composant dans des cabines de pulvérisation à lavage, caractérisé en ce que la reconcentration des pertes de pulvérisation diluées par l'eau de la cabine de pulvérisation est réalisée par nanofiltration sur des membranes ayant une limite d'exclusion de 200 à 2 000 g/mol sous des pressions de 12 à 40 bar.

2. Procedé selon la revendication 1, caractérisé en ce que la reconcentration des pertes de pulvérisation diluées par l'eau de la cabine est réalisée par nanofiltration sur des membranes ayant une limite d'exclusion de 200 à 1 000 g/mol sous des pressions de 15 à 30 bar.

3. Procédé selon les revendications 1 et 2, caractérisé en ce que l'eau de la cabine consiste en eau déminiralisée.

4. Procédé selon les revendications 1 à 3, caractérisé en ce que, pour améliorer le débit de perméat, on ajoute à l'eau de la cabine un dérivé de glycol ou des alcools mono- ou di-valents contenant le cas échéant des ponts éthers et solubles dans l'eau, en quantité allant jusqu'à 20 % du poids de l'eau.

5. Procédé selon les revendications 1 à 4, caractérisé en ce que, dans le cours de la nanofiltration, on contrôle le pH en permanence et on compense une diminution de ce pH par addition d'amines.

6. Utilisation du perméat obtenu dans le procédé selon les revendications 1 à 5, en tant qu'eau de la cabine.

7. Utilisation du rétentat obtenu dans le procédé selon les revendications 1 à 5, en tant que peinture ou constituant d'une nouvelle peinture.
